# EUROPÄISCHE PATENTSCHRIFT

(11) **EP 0 924 039 B1**
(45) Veröffentlichungstag und Bekanntmachung des Hinweises auf die Patenterteilung: **16.03.2005**
(21) Anmeldenummer: 99103431.5
(22) Anmeldetag: 30.12.1995
(51) Int. Cl.: B27G 13/04

(54) **Hobelmesser**
Rotary cutter blade
Couteaux de rabot

(30) Priorität: 23.01.1995 DE 29500996 U
(43) Veröffentlichungstag der Anmeldung: 23.06.1999
(62) Teilanmeldung aus: 95120751.3
(73) Patentinhaber: ROBERT BOSCH GMBH, 70442 Stuttgart (DE)
(72) Erfinder: Hild, Eugen, 72631 Aichtal (DE); Zaiser, Adolf, 73257 Koengen (DE)

(56) Entgegenhaltungen:
- EP-A- 0 804 320
- DE-A- 4 137 623

## Beschreibung

### Stand der Technik

Die Erfindung geht aus von einer Hobelmesser nach der Gattung des Anspruchs 1.

Es sind bereits Hobelmesser bekannt, die einen Justierkörper tragen, gegenüber dem die Hobelmesserschneide z.B. mittels Justierplatten justierbar ist.

Das Justieren der Hobelmesserschneide ist notwendig, weil sich nach deren Scharfschleifen durch den Werkstoffabtrag von wenigen Zehntel Millimetern die Schneide um dieses Maß gegenüber dem Hobelmesserkörper verlagert. Diese Verlagerung der Schneide führt zu einer Qualitätsminderung beim Hobeln, weil der Flugkreis und damit der Werkzeugeingriff gegenüber dem Werkstück und infolgedessen das Spanabtragverhalten verändert werden. Damit dies einfach ausgleichbar ist, tragen einige Hobelmesser an ihrem Rücken eine winkelprofilartige Leiste, die als Justierkörper dient. Der Justierkörper ist mittels Justierschrauben auf die Flachseite des Hobelmessers geschraubt. Diese greifen durch Langlöcher des Justierkörpers in Gewindebohrungen der Hobelmesser ein. Der eine Schenkel des Winkelprofils legt sich dabei parallel an die Flachseite des Hobelmessers, wobei der andere Schenkel rechtwinklig zur Flachseite bzw. parallel zum Messerrücken verläuft und über die untere Flachseite des Hobelmessers hinausragt. Der abgebogene Schenkel ist zum Eingriff in eine Haltenut einer Hobelwelle vorgesehen.

Der Justierkörper ist gegenüber dem Hobelmesser mittels der Justierschrauben mit Langlöchern verschiebbar befestigt. Auf diese Weise kann die Schneidenlage gegenüber dem abgebogenen Lappen stufenlos verändert bzw. immer wieder auf das vorgeschriebene Maß eingestellt werden.

Bei der bekannten Justierplatte wird die Stirnseite eines Quaders durch den abgebogenen Schenkel des Justierkörpers hintergriffen, während die untere Flachseite des Hobelmessers auf der Oberseite anliegt und wobei eine stufenartige auf die Oberseite befestigte Leiste als Anschlag für die Schneide dient. Der Abstand der stufenartigen Leiste bezüglich der vom abgerbogenen Schenkel hintergriffenen Stirnseite genau eingestellt.

Nach dem Scharfschleifen des Hobelmesses, insbesondere nach Beschädigung der Schneide durch Auftreffen auf einen Nagel oder andere metalische Teile, ist der Abstand der Schneide gegenüber dem abgebogenen Schenkel des Justierkörpers deutlich um den Betrag des Werkstoffabtrags beim Schleifen vermindert. Durch Auflegen des Hobelmessers auf die Justierplatte und in Anschlagbringen des Justierkörpers an die Stirnseite der Justierplatte wird zunächst die Lage des Justierkörpers festgelegt.

Nach dem Lösen der Justierschrauben kann das Hobelmesser gegenüber dem Justierkörper verschoben werden in Richtung der Anschlagleiste. Werden nun die Justierschrauben wieder festgeschraubt, ist die ursprüngliche Justierlage der Schneiden gegenüber dem abgebogenen Schenkel des Justierkörpers wieder hergestellt und demzufolge auch die Lage der Hobelmesserschneide auf einer entsprechenden Hobelwelle.

Die bekannten Hobelmesser mit Justierkörper haben den Nachteil, daß die Schraubenköpfe der Justierschrauben gegenüber den Klemmschrauben, mit denen das Hobelmesser an der Hobelwelle arretierbar ist, unterschiedliche Schlüsselweiten aufweisen, so daß zur Justierung und zur Klemmung zwei unterschiedliche Werkzeuge benötigt werden.

### Vorteile der Erfindung

Das erfindungsgemäße Hobelmesser mit den Merkmalen des Anspruchs 1 hat demgegenüber den Vorteil, daß das Hobelmesser mit nur einem einzigen Werkzeug zunächst justiert und anschließend an der Hobelwelle arretiert werden kann.

Weitere, vorteilhafte Ausgestaltungen der Erfindung ergeben sich aus den abhängigen Ansprüchen.

### Zeichnung

Ein Ausführungsbeispiel der Erfindung ist in der nachfolgenden Beschreibung anhand der zugehörigen Zeichnungen näher erläutert.

Es zeigen
Figur 1 eine bekannte Hobelwelle mit einem Hobelmesser mit Justierkörper
Figur 2 eine Explosionsdarstellung eines Hobelmessers mit Justierkörper und Justierschrauben
Figur 3 ein Ausführungsbeispiel einer Justierplatte mit aufgelegtem Hobelmesser und Justier- und Arretier-Schraubwerkzeug
Figur 4 einen seitlichen Schnitt durch die Justierplatte im Bereich einer Justierschraube
Figur 5 eine räumliche Darstellung der Justierplatte und Figur 6 eine Draufsicht auf die Justierplatte mit gehaltertem Justier- und Arretierwerkzeug.

### Beschreibung der Ausführungsbeispiele

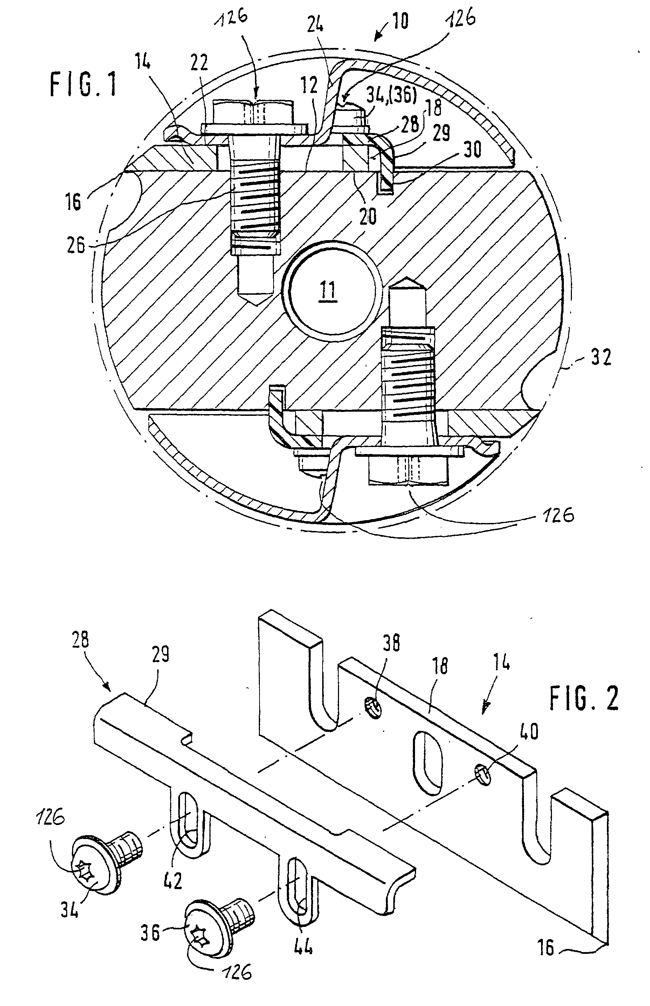

Figur 1 zeigt zum besseren Verständnis der eigentlichen Erfindung, die gemäß den nachfolgenden Figuren erläutert wird, einen Längsschnitt einer Hobelwelle 10 mit einer Achse 11. Diese trägt gegenüber der Achse 11 spiegelbildlich einander gegenüber angeordnet zwei Abplattungen 12, von denen nur die Einzelheiten der oberen Seite der Darstellung näher bezeichnet sind.

Die Abplattung 12 trägt ein Hobelmesser 14 mit einer Schneide 16 und mit einem Messerrücken 18, der sich auf der der Schneide 16 entgegengesetzten Schmalseite befindet. Mit einer unteren Flachseite 20 liegt das Hobelmesser 14 bündig auf der Abplattung 12 auf. Gegen die obere Flachseite 22 stützt sich eine Spannbacke 24, die mittels einer als Kopfschraubbolzen ausgestalteten Klemmschraube 26 mit Innen-Mehrkant 126 an der Hobelwelle 10 befestigt ist und das Hobelmesser 14 festspannt. Der Innen-Mehrkant 126 der Klemmschraube 26 hat das gleiche Maß wie der Innen-Mehrkant 126 der in Figur 2 gezeigten Justierschrauben 34, 36.

Das Hobelmesser 14 trägt auf seiner oberen Flachseite 22 im Bereich des Messerrückens 18 einen als L-Profilleiste ausgestalteten Justierkörper 28 aus Kunststoff, der mit seinem rechtwinklig zur unteren Flachseite 20 bzw. parallel zum Messerrücken 18 gebogenen Schenkel 29 in eine Nut 30 in der Abplattung 12 eingreift. Durch diese parallel zur Achse 11 angeordnete Nut 30 wird die Lage der Schneide 16 gegenüber dem Justierkörper 28 wiederholbar festgelegt. Die Position der Schneide 16 ist durch das Soll-Maß des Flugkreises 32 bestimmt.

Zwei Justierschrauben 34, 36 mit einem Innen-Mehrkant 126, von denen hier nur die erste 34 sichtbar ist, greifen in Gewindebohrungen 38, 40 des Hobelmessers 14 und halten daran den Justierkörper 28 fest.

In Figur 2 zeigt eine räumliche Darstellung des Hobelmessers 14 die Schneide 16, den Rücken 18, die Gewindebohrungen 38, 40 und den Justierkörper 28 mit dem Schenkel 29. Die Justierschrauben 34, 36 mit Innen-Mehrkant 126 durchtreten die Langlöcher 42, 44 des Justierkörpers 28 und greifen in die Gewindebohrungen 38, 40 ein. Somit halten sie den Justierkörper 28 gegenüber dem Hobelmesser 14 justierbar fest.

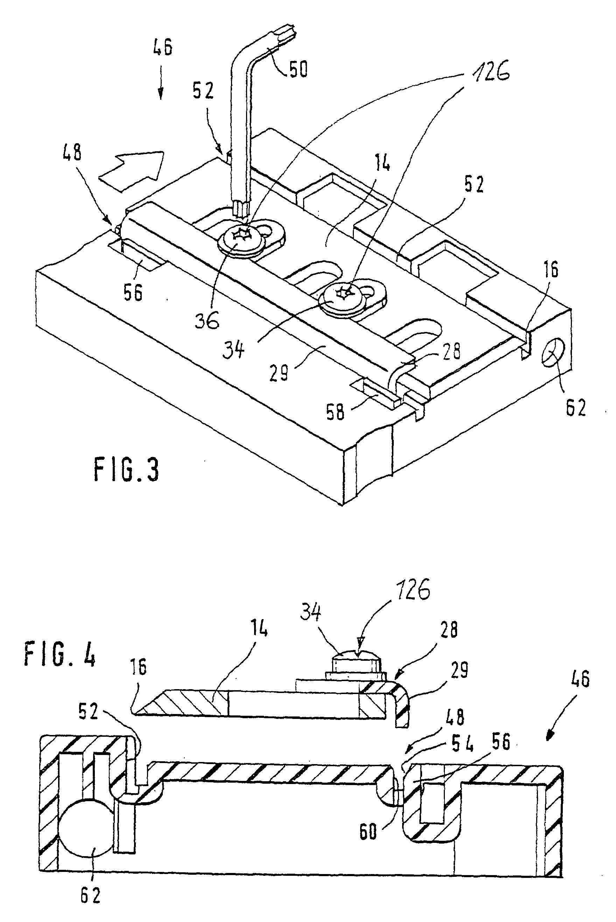

In Figur 3 ist die räumliche Darstellung einer Justierplatte 46 gezeigt, auf der das Hobelmesser 14 mit dem Justierkörper 28 justierbereit befestigt ist. Der Justierkörper 28 greift mit seinem abgebogenen Schenkel 29 in eine Nut 48 der Justierplatte 46 und wird darin durch die angeformten Federzungen bzw. Blattfedern 56, 58 festgehalten. Die Nut 48 hat die gleiche Aufgabe, wie die Nut 30 in der Abplattung 12 der Hobelwelle 10 gemäß Figur 1.

Mit einem Schraubendreher 50 zum Eingriff in jeweils den Innen-Mehrkant 126 der Justierschrauben 34, 36 werden diese gelöst. Dann wird das Hobelmesser 14 in Pfeilrichtung soweit verschoben, bis die Schneide 16 an die stirnseitige Stufe 52 der Justierplatte 46 anschlägt. Anschließend werden die Justierschrauben 34, 36 in umgekehrter Drehrichtung wie beim oben beschriebenen Lösen mittels Eingriff des Schraubendrehers 50 in jeweils den Innen-Mehrkant 126 der Justierschrauben 34, 36 wieder festgedreht.

An der Seite der Justierplatte 46 ist eine Öffnung 62 zum Deponieren des Innenmehrkant-Schraubendrehers bzw. Steckschlüssels 50 angeordnet.

In Figur 4 ist ein Querschnitt durch die Justierplatte 46 gezeigt, wobei die Stufe 52 als Anschlag für die Schneide 16 des Hobelmessers 14 deutlich sichtbar ist. Außerdem sind der Justierkörper 28 mit seinem abgebogenen Schenkel 29 sowie die Nut 48 und die Öffnung 62 der Justierplatte 46 sichtbar.

Die rückwärtige Nutseitenwand 54 wird durch die Blattfedern 56, 58 ergänzt, von denen hier nur die eine Blattfeder 56 sichtbar ist, die den Schenkel 29 nach dem Einsetzen in die Nut 48 gegen die vordere Nutseitenwand 60 entsprechend dem Richtungspfeil 59 pressen und so in definierter Lage festhalten. Dadurch wird das Einstellen des Hobelmessers 14 gegenüber dem Justierkpörper 28 und das Festdrehen der Innenmehrkant-Justierschrauben 34, 35 wesentlich erleichtert.

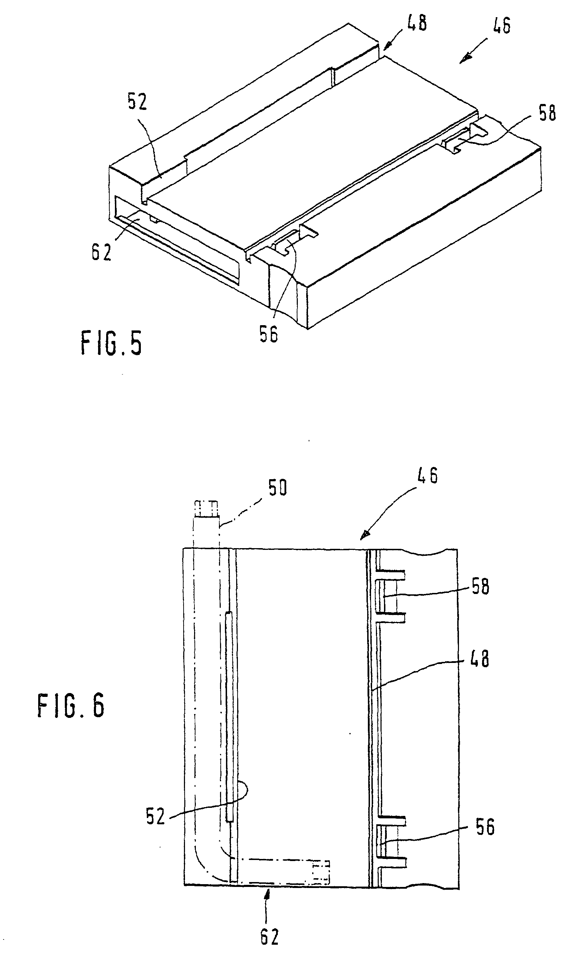

In Figur 5 ist eine räumliche Darstellung der Justierplatte 46 gezeigt, wobei die Federn 56, 58 und die Öffnung 62 zum Deponieren des Schraubendrehers 50 deutlich von der anderen Seite sichtbar sind

In Figur 6 ist die Draufsicht auf eine Justierplatte 46 gezeigt, wobei die Anschlagfläche der Stufe 52, die Nut 48, die Federn 56, 58 und der zur Aufbewahrung eingesteckte Winkelschraubenzieher 50 zu Lösen bzw. Festdrehen sowohl der Justierschrauben 34, 36 zwischen dem Justierkörper 28 und dem Hobelmesser 14 als auch der Klemmschrauben 26 zwischen der Hobelwelle 10 und dem Hobelmesser 14 bzw. der Spannbacke 24 erkennbar sind.

## Patentansprüche

1. Hobelmesser mit Justierkörper (28) zum Justieren in einer Justierplatte (46) mit Anschlägen (48, 52) zum Einstellen des Abstandsmaßes der Schneide (16) eines Hobelmessers (14) gegenüber einem Bezugsbereich (29) des am Hobelmesser (14) verstellbar angeordneten Justierkörpers (28), wobei die Schneide (16) und der Justierkörper (28) an den Anschlägen (48, 52) der Justierplatte (46) zur Anlage bringbar sind, wobei der Justierkörper (28) mit Justierschrauben (34, 36) spannbar ist und wobei das Hobelmesser (14) an einer Hobelwelle (10) mit Klemmschrauben (26) befestigbar ist, **dadurch gekennzeichnet,**
**daß** die Justierschrauben (34, 36) und die Klemmschrauben (26) übereinstimmende Werkzeugeingriffsmaße, insbesondere Schlüsselweite, haben.

2. Hobelmesser nach Anspruch 1, **dadurch gekennzeichnet, daß** die Justierschrauben (34, 36) und die Klemmschrauben (26) als Innenmehrkantschrauben mit einheitlichem Innen-Mehrkant (126) ausgestaltet sind.

3. Hobelmesser nach Anspruch 2, **dadurch gekennzeichnet, daß** der Innen-Mehrkant (126) als Innen-Sechskant ausgestaltet ist.

## Claims

1. Planer cutter comprising an adjusting body (28) for adjusting in an adjusting plate (46) having stops (48, 52) for setting the distance of the cutting edge (16) of a planer cutter (14) from a reference region (29) of the adjusting body (28) arranged on the planer cutter (14) in an adjustable manner, it being possible for the cutting edge (16) and the adjusting body (28) to be brought to bear against the stops (48, 52) of the adjusting plate (46) , it being possible for the adjusting body (28) to be clamped by means of adjusting screws (34, 36), and it being possible for the planer cutter (14) to be fastened to a cutter block (10) by means of clamping screws (26), **characterized in that** the adjusting screws (34, 36) and the clamping screws (26) have corresponding tool engagement dimensions, in particular a corresponding width across flats.

2. Planer cutter according to Claim 1, **characterized in that** the adjusting screws (34, 36) and the clamping screws (26) are designed as polygonal socket screws having a uniform polygonal socket (126).

3. Planer cutter according to Claim 2, **characterized in that** the polygonal socket (126) is designed as a hexagon socket.

## Revendications

1. Couteau de rabot ayant un corps de réglage (28) pour être réglé dans une plaque de réglage (46) munie de butées (48, 52) destinées à régler la distance du tranchant (16) du couteau (14) par rapport à une zone de référence (29) du corps de réglage (28) réglable sur le couteau (14), le tranchant (16) et le corps de réglage (28) étant posés sur les butées (48, 52) de la plaque de réglage (46), et le corps de réglage (28) étant serré avec des vis de réglage (34, 36) alors que le couteau de rabot (14) est fixé sur un axe de rabot (10) par des vis de serrage (26),
**caractérisé en ce que**
les vis de réglage (34, 36) et les vis de serrage (26) ont des prises d'outils, notamment des largeurs de clé, identiques.

2. Couteau de rabot selon la revendication 1,
**caractérisé en ce que**
les vis de réglage (34, 36) et les vis de serrage (26) ont des vis à multi-pans creux (126) de même taille.

3. Couteau de rabot selon la revendication 2,
**caractérisé en ce que**
le multi-pan creux (126) est un six-pans creux.
